(19) **Europäisches Patentamt**

**European Patent Office**

**Office européen des brevets**

(11) **EP 1 372 335 B1**

(12) **EUROPEAN PATENT SPECIFICATION**

(45) Date of publication and mention
of the grant of the patent:
**09.03.2005 Bulletin 2005/10**

(51) Int Cl.⁷: **H04N 1/40**, H04N 7/01

(21) Application number: **02425382.5**

(22) Date of filing: **12.06.2002**

(54) **Processing method for obtaining a high-resolution digital image**

Verfahren zur Herstellung von Digital-Bildern mit hoher Auflösung

Méthode pour derivation des images numériques de haute résolution

(84) Designated Contracting States:
**DE FR GB IT**

(43) Date of publication of application:
**17.12.2003 Bulletin 2003/51**

(73) Proprietor: **STMicroelectronics S.r.l.**
**20041 Agrate Brianza (Milano) (IT)**

(72) Inventors:
• **Messina, Giuseppe**
  **98030 Giardini Naxos (Messina) (IT)**
• **Mancuso, Massimo**
  **20052 Monza (Milano) (IT)**
• **Battiato, Sebastiano**
  **95022 Acicatena (Catania) (IT)**

(74) Representative: **Siniscalco, Fabio et al**
**Jacobacci & Partners S.p.A.**
**Via Senato, 8**
**20121 Milano (IT)**

(56) References cited:
**WO-A-01/26359**

• **IRANI M ET AL: "Super resolution from image sequences" PROCEEDINGS OF THE INTERNATIONAL CONFERENCE ON PATTERN RECOGNITION. ATLANTIC CITY, JUNE 16 - 21, 1990. CONFERENCE A: COMPUTER VISION AND CONFERENCE B: PATTERN RECOGNITION SYSTEMS AND APPLICATIONS, LOS ALAMITOS, IEEE COMP. SOC. PRESS, US, vol. 1 CONF. 10, 16 June 1990 (1990-06-16), pages 115-120, XP010020478 ISBN: 0-8186-2062-5**
• **PATENT ABSTRACTS OF JAPAN vol. 2002, no. 03, 3 April 2002 (2002-04-03) & JP 2001 309229 A (VICTOR CO OF JAPAN LTD), 2 November 2001 (2001-11-02)**
• **PATENT ABSTRACTS OF JAPAN vol. 2000, no. 15, 6 April 2001 (2001-04-06) & JP 2000 350225 A (SONY CORP), 15 December 2000 (2000-12-15)**
• **PATENT ABSTRACTS OF JAPAN vol. 1998, no. 04, 31 March 1998 (1998-03-31) & JP 09 322070 A (NEC HOME ELECTRON LTD), 12 December 1997 (1997-12-12)**

EP 1 372 335 B1

**Description**

The present invention concerns the acquisition and processing of digital images and, more particularly, refers to a method for obtaining high-resolution images by processing several low-resolution images representing one and the same real scene.

Digital images are currently utilized in many different applications, cases in point being such new-generation acquisition devices as digital still cameras, often referred to as DSCs.

The availability of sensors of ever greater resolution and low-cost, low-consumption digital signal processors (DSPs) has led to a considerable commercial diffusion of digital still cameras. For this reason there is now felt the need for realizing low-cost acquisition devices that will nevertheless render possible the acquisition of high-quality digital images.

The quality of an image depends substantially on the characteristics of the sensor with which the image is acquired, especially its resolution.

The sensor, which in digital still cameras will be typically either a CCD (Charge Coupled Device) or a CMOS (Complementary Metal Oxide Semiconductor), is an integrated circuit comprising a matrix of photosensitive cells or elements, each associated with a corresponding pixel. When the image is acquired from a real scene, each cell produces an electric signal proportional to the light that strikes it. More precisely, each cell responds to the radiance (emitted quantity of light) of a particular portion of the real scene: this portion constitutes the receptive field of the pixel.

The larger the number of photosensitive cells or - which amounts to the same thing - the greater the spatial resolution of the sensor, the denser will be the information relating to the real scene captured in the acquisition process.

But the choice of obtaining a higher image resolution by stepping up the sensor resolution in terms of number of pixels is not always feasible for reasons that are both technological and economic in nature.

When acquiring a digital photograph, moreover, a sensor, no matter how good its resolution, will always produce an approximation of the scene that is to be shot. The photosensitive cells of the sensor are always separated by a certain distance, because not all the sensor area can be uniformly covered with photosensitive elements and technological reasons make it inevitable that there should be a certain minimum distance between adjacent cells. This spacing is the cause of a first loss of information in the acquisition process.

Another reason why a digital image acquired with a sensor of the type commonly employed in digital still cameras constitutes only an approximation of the real scene is bound up with the interpolation process of the data acquired by the sensor.

As is well known, a digital image can be represented by a matrix of elements (pixels) corresponding to elementary portions of the image, and each of these elements has associated with it one or more digital values representative of the optical components. In a monochromatic image, for example, only a single digital value is associated with each pixel; in this case it is usually said that the image is made up of only a single channel or plane.

On the other hand, in a coloured image - which may be in RGB (Red Green Blue) format, say - each pixel has associated with it three digital values that correspond, respectively, to the three components (red, green, blue) of the additive chromatic synthesis. In this case the image can be decomposed into three distinct planes, each containing the information relating to just one of the chromatic components.

A typical sensor will dedicate a single and substantially monochromatic photosensitive cell to each pixel of the image. Furthermore, the sensor is provided with an optical filter consisting of a matrix of filtering elements, each of which covers one photosensitive cell. Subject to a minimal absorption, each filtering element transmits to the photosensitive cell with which it is associated the luminous radiation corresponding to the wavelength of nothing but red light, nothing but green light or nothing but blue light. For each pixel there is thus revealed just one of the three primary components (R,G,B) of the additive chromatic synthesis.

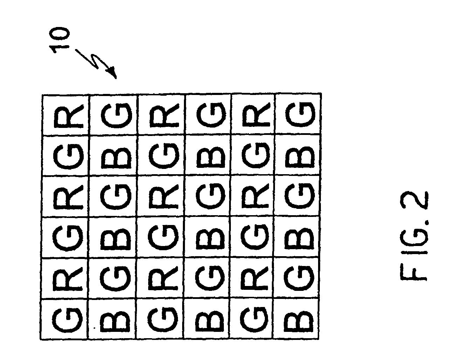

The type of filter employed varies from one maker to another; the most common is the so-called Bayer filter. In this filter the arrangement of the filtering elements, the so-called Bayer pattern, is as shown in element matrix 10 reproduced in Figure 2.

The electric signals produced by the photosensitive cells are converted into digital values in accordance with conventional methodologies. The digital image obtained in this manner is incomplete, because it is made up of only a single component (R, G or B) for each pixel. The format of this image is conventionally referred to as CFA (Colour Filter Array).

The CFA image is then subjected to a complex reconstruction process to produce a "complete" image, in RGB format for example, in which three digital values will be associated with each pixel.

This reconstruction implies a passage from a representation of the image in a single plane (Bayer plane) to a representation in three planes (R,G,B). The reconstruction is obtained by means of known interpolation algorithms.

It should be noted that the interpolation produces only an approximation of the image that would be obtained with a sensor capable of acquiring three optical components per pixel. In this sense, therefore, the interpolation process introduces yet another approximation into the acquired image.

Given these limitations of the quality of the acquired image introduced by the sensor characteristics and the interpolation process, recourse is often had to further processing operations in order to obtain a high-resolution digital image.

To this end prior art proposes numerous methods that are generally based on the principle of reconstructing the original information of the real scene lost in the acquisition process for the reasons set out above by combining the information contained in a plurality of initially acquired low-resolution digital images that all represent the same scene.

To this end it is essential that the initially acquired images, which we shall henceforth refer to more briefly as the starting images, should together constitute some additional information that could not be obtained from identical images.

The known methods comprise some that operate in the spatial domain (that is to say, in the pixel domain) and others in the frequency domain. The latter combine a certain number of low-resolution starting images after having transformed them in the spatial frequency domain. After the image in the frequency domain obtained from this combination has been brought back into the spatial domain, it has a better resolution than the starting images. However, the methods operating in the frequency domain call for a very considerable computational effort.

The methods that operate in the spatial domain, on the other hand, comprise a particular class that employs an approach known as "back projection", which is wholly similar to the one utilized, for example, in so-called computer-aided axial tomography (CAT), in which a two-dimensional object is reconstructed from a series of one-dimensional projections thereof.

The back-projection approach assumes that the low-resolution starting images of one and the same scene represent different projections of a high-resolution image that reproduces the real scene. The projection operator is the selfsame acquisition process, which depends to a large extent on the acquisition device, which is assumed to be known. The problem is thus reduced to reconstructing the high-resolution image from its various projections.

In particular, the method employed by M. Irani and S. Peleg, described among others in "Super Resolution From Image Sequences" (IEEE, 1990), obtains an iterative reconstruction of the high-resolution image by correcting/improving this image in several successive steps on the basis of the differences between the starting images and images obtained by means of simulation from the projections of the high-resolution image as from time to time corrected or improved (by iteration).

This method is associated with a first drawback that derives from the fact that the obtainment of high-quality images calls for an accurate modelling of the acquisition process (or device) with which the low-resolution images have been obtained. For this reason the method in question gives rise to a complicated method that does not lend itself to being implemented in a commercial acquisition device such as a digital still camera.

A second difficulty is bound up with the fact that the said method calls for a considerable number of iterations at each iteration step and this, in its turn, implies numerous problems in devices in which the optimization of the energy, processing and memorization resources is a factor that has an important bearing on their commercial success.

The present invention therefore sets out to make available a method for obtaining high-resolution images that will not give rise to the drawbacks of the prior art methods that have just been described.

This aim is attained with a method for obtaining high-resolution images from a plurality of starting images formed by pixel matrices and acquired at a lower resolution, all as described in Claims 1 to 25 hereinbelow. To this end the term "high-resolution image" as used in connection with the present invention is to be understood as referring to an image, no matter what its resolution, that is represented on a larger number of pixels than the starting images.

The object of the present invention also comprises an acquisition device as described in Claim 26 hereinbelow.

Further characteristics and advantages of the invention will brought out more clearly by the detailed description about to be given of a preferred embodiment thereof, which is to be considered as an example and not limitative in any way, said description making reference to the attached drawings of which:

- Figure 1 shows a schematic representation of a possible acquisition device that implements the method in accordance with the present invention;
- Figure 2 shows the manner in which the filtering elements are arranged in a sensor filter of the Bayer type that can be employed in the device of Figure 1;
- Figures 3, 4, 5a and 5b provide a simplified illustration of some steps of the method in accordance with the present invention; and
- Figures 6a and 6b show the results of experimental tests relating to the method in accordance with the present invention.

The preferred embodiment of the present invention concerns a portable device capable of acquiring digital images and, more particularly, a digital still camera.

In this connection it should be noted that the precepts of the present invention can be extended also to applications other than those explicitly mentioned in the present description, portable and multimedial communication terminals of the new generation being a case in point.

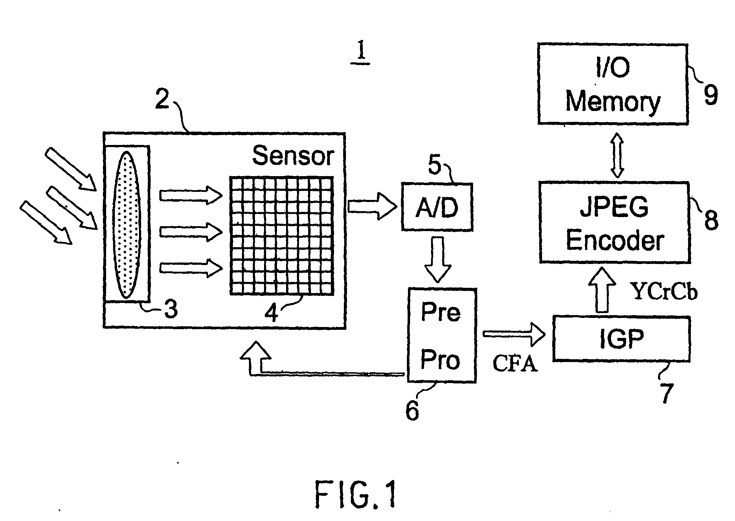

As can be seen in Figure 1, a digital still camera 1 includes an acquisition block 2 consisting of an objective with a diaphragm 3 and a sensor 4. The objective 3 serves to focus the light radiations produced by a real scene onto the sensor 4.

Sensor 4, which among others may be of the CCD or CMOS type, is an integrated circuit comprising a matrix of photosensitive cells, each of which serves to generate an electric signal proportional to the quantity of light that strikes it during the acquisition interval. In a preferred embodiment the sensor 4 comprises an optical filter with a Bayer matrix.

The still camera 1 also includes an A/D converter, indicated by the reference number 5, to transform the signal generated by each photosensitive cell into a digital value with a predetermined number of bits (generally 8, 10 or 12 bits). By way of example and without thereby introducing any limitation whatsoever, we may here assume that in the present invention the A/D converter 5 is such as to encode the incoming analog signals into digital values represented with 8 bits. In that case the digital values of the pixels will be comprised between a minimum binary value equal to 0 and a maximum binary value equal to 255.

The digital image constituting the output of the A/D converter 5 is in CFA format, since it is made up of just one chromatic component per pixel. This means that just a single 8-bit digital value will be associated with each pixel.

A pre-processing (or PrePro) unit 6, active before and during the entire acquisition phase, is such as to interact with the acquisition block 2 and to extract from the CFA image a number of parameters useful for carrying out automatic control functions: automatic focusing, automatic exposure, correction of sensor defects, and white balancing.

A unit 7, described as IGP (Image Generation Pipeline), serves to perform a processing phase intended to obtain a high-resolution digital image. In digital still cameras the unit 7 is commonly realized in the form of a dedicated processor (CFA processor), possibly in VLSI (Very Large Scale Integration) technology.

In particular, the processing phase performed in the IGP unit 7 is such as to produce from the incomplete digital starting image in CFA format a complete digital image, in YcrCb format for example, in which three digital values (24 bits) - i.e. a luminance component Y and two chrominance components Cr and Cb - are associated with each pixel. This transformation, obtained - for example - by means of interpolation, implies passage from a representation of the image in a single plane (Bayer plane) that contains the information relating to the different chromatic components to a representation in three planes.

Preferably the IGP block 7 will also be such as to carry out various functions for improving the image quality, including: filtering the noise introduced by the sensor 4, application of special effects and other functions that will generally vary in both number and type from one maker to another.

Without thereby introducing any limitation, we could here assume the unit 7 to be such as to carry out the operations involved in the method for obtaining high-resolution digital images in accordance with the present invention. In a different embodiment, however, these operations could also be performed in a separate block.

The IPG block is followed by an encoder/compression block 8 that is generally of the JPEG type. The compressed image may be saved in a memory unit 9 or sent to an external peripheral unit.

In the present example the improvement method in accordance with the invention is applied to a plurality of low-resolution starting images. For the sake of brevity, this plurality will hereinafter be referred to also by such expressions as "starting plurality" or "starting images".

According to a particular embodiment of the invention, we may suppose the starting images to be in YCrCb format and to consists of square pixel matrices of size *nxn.* For example, we may consider the specific case in which the method in accordance with the present invention produces a final image having a resolution stepped up by a factor *M* in every dimension.

The low-resolution starting images are acquired in sequence by the still camera 1 and the acquisition block 2, preferably separated from each other by only a short time interval and with slightly different orientations of the still camera. In a preferred embodiment several images (two or three, for example) will be acquired every time the user releases the shutter. It should be noted that the micro-oscillations of the still camera 1 between one acquisition and the next, oscillations due to involuntary micro-movements of the user's hand, will be sufficient to generate images that, even when their relative misalignments are minimal, have different information contents. It should also be noted that the starting images acquired in this manner represent one and the same scene and, being relatively misaligned, reproduce portions of that scene that are different and at least partially superposed.

Following acquisition, each of the starting images is converted into digital values by the A/D converter 5 and then processed in the pre-processing block 6.

The CFA-format images on the output side of the pre-processing block 6 are then sent to the IGP block 7. In this block each image is subjected to an interpolation phase and is thus transformed into a complete low-resolution image in, for example, YCrCb format.

The interpolation phase may be carried out, for example, by means of methodologies known to a person skilled in the art and are therefore brought out by the previous description.

The method in accordance with the invention envisages operating separately on the planes or channels that make up the images. For the sake of simplicity we may here assume that the method operates on the luminance planes Y of the starting images; hereinafter we shall use the term "images" as referring in particular only to the respective luminance components Y.

The chrominance planes Cr and Cb may be subjected to a procedure wholly analogous to the one about to be described, though it is also conceivable to obtain a computational saving by applying the method only to the luminance plane Y, which represents the component to which the human eye is most sensitive.

The low-resolution starting images are subjected to an alignment or registering phase that consists of an estimate of the misalignment of the images introduced in the acquisition phase. To this end one of the starting images, possibly the first one to be acquired, is selected as the reference image, estimating the amount by which the others are misaligned with respect to it.

The estimate of the misalignment may be obtained by means of conventional techniques of either the "local motion" or the "global motion" type; the latter are less complex as far as computational effort is concerned.

In a preferred embodiment the technique employed is of the global motion type; for example, the techniques described in "Efficient, Robust and Fast Global Motion Estimation for Video Coding" (F. Dufaux, J. Konrad, IEEE Trans. On Image Processing, Vol.9, No.3, March 2000) and in "Robust Global Motion Estimation Using Simplified M-estimator Approach" (A. Smolic, J.R. Ohm, Proc. IEEE ICIP 2000, September 2000) have been found to be satisfactory.

The alignment phase is preferably realized in a high-precision manner by estimating the misalignments between the images even when they are of the order of fractions of a pixel (sub-pixel precision).

Once the relative movement between the low-resolution starting images have been defined, these images are combined to generate a first approximation or estimate of the high-resolution image, in this example of size *(nxM) x(nxM),* which will hereinafter be referred to also by the name of provisional high-resolution image.

To this end each starting image is first expanded to a resolution substantially equal to the resolution of the provisional image. In this particular example the starting images are expanded to a resolution increased by a factor *M* in every dimension. This expansion is wholly similar to an enlargement and may be obtained by simply reproducing each pixel in a grid or block of pixels of size *MxM.* In a possible variant, however, any known enlargement algorithm of the intelligent/adaptive type - of the bicubic type, for example - could be used for the expansion phase.

The expanded starting images are then combined pixel by pixel, taking due account of their relative misalignments. In practice each pixel of the provisional high-resolution image is generated by combining "homologous" pixels of the aligned and expanded starting images.

In this way each pixel of the provisional high-resolution image will be influenced by a plurality of "homologous" pixel, each of which forms part of one of the starting images.

The term 'homologous' is here to be understood as referring to the pixels of the starting images, or analogously of the expanded starting images, that represent or refer to one and the same elementary portion (receptive field) of the real scene.

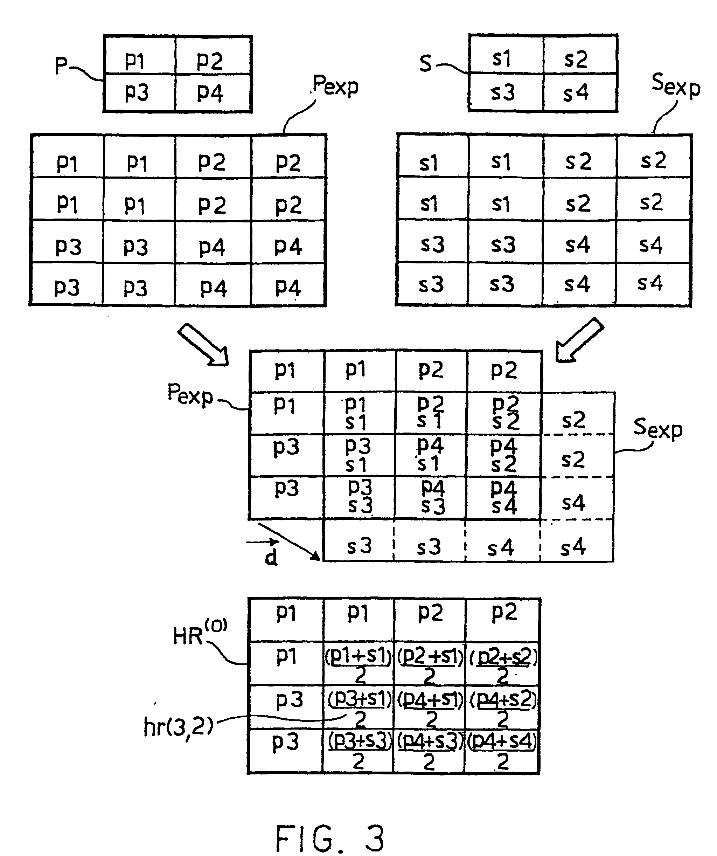

By way of example, Figure 3 illustrates the obtainment of a provisional high-resolution image $HR^{(0)}$ of size 4x4, starting from the combination of two low-resolution starting images of size 2x2. In particular, in Figure 3 the image $HR^{(0)}$ is obtained from two starting images indicated, respectively, by *P* and *S*. Both *P* and *S* comprise four pixels, respectively p1, p2, p3, p4 and s1, s2, s3, s4. A generic pixel (or, more precisely, a digital value of the pixel) of the provisional image $HR^{(0)}$ will here be indicated by hr(x,y), where (x,y) represent the space coordinates of the pixel in the matrix.

Figure 3 also shows the two expanded starting images, respectively $P_{exp}$ and $S_{exp}$, which correspond to the images *P* and *S* after they have been expanded by a factor *M*=2 in every dimension. As can be noted, the expanded starting images $P_{exp}$ and $S_{exp}$ are obtained by reproducing the pixels of the starting images in blocks of size *MxM*=4 of adjacent pixels. In this way each expanded image consists of sixteen pixels.

Figure 3 also shows the expanded images $P_{exp}$ and $S_{exp}$ misaligned with respect to each other by a vector $\bar{d}$. The estimate of this vector is obtained in the "global motion" alignment phase performed preferably on the low-resolution starting images *P, S*.

For the purposes of this example the reference image has been taken to be the image *P* and therefore also the expanded image $P_{exp}$.

It should be noted that there may be pixels $S_{exp}$ that are not superposed on pixels of $P_{exp}$. These pixels refer to portions of the real scene captured by the image *S* but not by *P*. But there are also regions of the scene that are captured by pixels of both images.

It should also be noted that the provisional high-resolution image $HR^{(0)}$ comprises pixels equal to pixels of the reference image $P_{exp}$ in those regions of $P_{exp}$ that are not superposed on regions of the image $S_{exp}$ and contains also pixels obtained by combining homologous pixels of $P_{exp}$ and $S_{exp}$ in the superposed regions of $P_{exp}$ and $S_{exp}$.

According to this particular example, the combination is a simple operation of arithmetical averaging of homologous pixels.

For example, the pixel hr(3,2) of the image $HR^{(0)}$ is obtained by combining the pixel p3 of the starting image $P$ and the pixel s1 of the starting image $S$. In this sense, therefore, the pixel hr(3,2) is influenced by the homologous pixels s1 and p3 of the low-resolution starting images.

The pixels of the starting images not superposed on pixels of the reference image do not form part of the provisional high-resolution image $HR^{(0)}$.

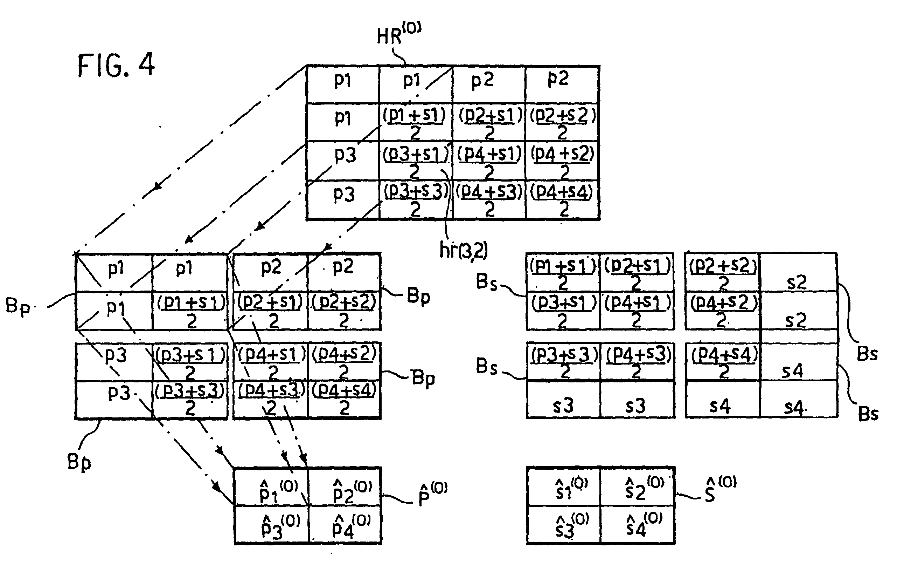

Once the provisional image $HR^{(0)}$ has been obtained, it is projected backwards as required by the back projection technique to produce another plurality of low-resolution images, each of which corresponds to a respective low-resolution image of the starting plurality. This projection is obtained by means of a simulation of the acquisition process, which in this case is represented by the set of all the operations performed by the still camera 1, which yields an interpolated digital image of the real scene. Figure 4 shows the provisional image $HR^{(0)}$ and the back-projected low resolution images indicated by, respectively, $P^{(0)}$ and $S^{(0)}$.

According to the back projection approach, the provisional high-resolution image $HR^{(0)}$ is now considered as if it were the real scene and the simulation of the acquisition process produces further projected low-resolution images from it.

Simulation of the acquisition process requires one to establish a model of this process for use in the processing.

This model will preferably be a function that expresses a link between the pixel blocks $Bp, Bs$ of size $MxM$ of the provisional high-resolution image $HR^{(0)}$ and individual pixels of the projected low-resolution images $P^{(0)}$ and $S^{(0)}$.

This is effectively in line with what happens in the acquisition process, in which a pixel of a low-resolution image captures the information of the real scene or, more precisely, of the portion of the real scene that forms part of its receptive field.

For example, from the block Bp comprising the pixels with digital values p1,p1,p1, (p1+s1)/2 there is generated a pixel in the image $P^{(0)}$.

In a preferred embodiment this model or function makes it possible to produce from a pixel block Bp, Bs (of size $MxM$) of the provisional high-resolution image $HR^{(0)}$ a pixel in each projected image $P^{(0)}$ e $S^{(0)}$ that will be homologous with the one of the starting image $P$, $S$ that generated this block in the expansion phase.

A model - and even a very accurate one - of the acquisition process/device may be determined by means of conventional techniques for characterizing the employed components (for example: objective 3, sensor 4, etc.).

Nevertheless, the method in accordance with the invention does not necessarily call for a very accurate model. For example, a model that approximates the acquisition process and has yielded good experimental results is a simple operation of averaging the pixels of one and the same block $MxM$ of the provisional image $HR^{(0)}$.

In the present invention the provisional high-resolution image $HR^{(0)}$ is then iteratively processed, i.e. modified at least partly pixel by pixel, in such a way as to reduce a difference between corresponding images of the starting plurality of images and the plurality of projected images. This processing operation aims at improving the provisional high-resolution image at each iterative step and thus obtaining a definitive high-resolution image. In particular, this processing of the provisional image $HR^{(0)}$ can be continued to the point where no further improvement can be obtained or a possible further improvement would not produce any appreciable results.

In a preferred embodiment of the invention this processing may involve a part of the pixels of the provisional image, because it is possible for the provisional image obtained from the combination of the starting images to comprise regions or pixels that do not need processing/improvement. Consequently, some pixels of this image may not be modified and will therefore appear unchanged (with respect to the provisional image) in the final high-resolution image.

For the purpose of selecting the pixels of the provisional image $HR^{(0)}$ that are to be modified, it is preferable first to associate with each pixel of the provisional image a measure $D_U(x,y)$ that represents its uncertainty, said measure being obtained on the basis of the values of the corresponding (homologous) pixels forming part of the starting images. The regions of the provisional image $HR^{(0)}$ that effectively need improvement are then selected pixel by pixel on the basis of this uncertainty measure.

Following this selection, it will be particularly advantageous to leave unchanged the pixels of the provisional image $HR^{(0)}$ with which there is associated an uncertainty measure $D_U(x,y)$ smaller than a predetermined threshold value T. On the other hand, either all or at least a part of the pixels with which there is associated an uncertainty measure $D_U(x,y)$ equal to or greater than the predetermined threshold value T will be modified as described above.

The measure $D_U(x,y)$ associated with each pixel of the provisional high-resolution image and representative of the uncertainty of that pixel can be obtained by statistically characterizing the distribution of the digital values of the homologous pixels of the starting images that - upon being combined - generated the given pixel in the provisional high-resolution image $HR^{(0)}$. When a pixel has been generated by combining homologous low-resolution pixels having "widely distributed" and therefore very different digital values, the pixel in question will have a large uncertainty measure associated with it, while in the contrary case a small uncertainty value will be associated with the pixel.

According to a preferred embodiment of the invention, the uncertainty measure $D_U(x,y)$ associated with a pixel hr(x,y) of $HR^{(0)}$ is equal to the difference between the maximum value Max(x,y) and the minimum value Min(x,y) of the values of the homologous pixels forming part of the (expanded) starting images that generated it upon being combined.

For example, if each pixel is represented with 8 bits, a pixel hr(x,y) of the provisional high-resolution image $HR^{(0)}$ will be left unchanged when

$$D_U(x, y) = Max(x, y) - Min(x, y) < T$$

where the predetermined threshold value T is preferably equal to about 10 or, better still, equal to about 5.

Experimental results have also shown that a substantial computational saving can be obtained if, over and above the pixels having a small uncertainty value associated with them, there are left unchanged also the pixels of the provisional high-resolution image $HR^{(0)}$ obtained by combining homologous pixels that are associated with a range of digital values that are not readily perceived by the human visual system. These pixels will typically form part of regions that either highly illuminated (saturation regions) or particularly dark (noisy regions).

For example, if each pixel is represented with 8 bits, a pixel hr(x,y) of the provisional high-resolution image $HR^{(0)}$ will be left unchanged when

$$Max(x,y) < S$$

or when

$$Min(x,y) > L$$

where, preferably, the predetermined threshold value $S$ will substantially lie within the range [5-10] and the predetermined threshold value L will substantially lie within the range [225-230].

These computational optimisations of the processing method for obtaining a high-resolution image are performed only once during the first step of the iteration procedure and, more precisely, after or during the phase of obtaining the provisional high-resolution image $HR^{(0)}$.

According to a preferred embodiment of the invention, before processing the provisional image $HR^{(0)}$ or, more precisely, before modifying the pixels of this image that are to be improved, there is performed an error calculation operation or phase to associate a respective error with at least a part of the pixels of the provisional image $HR^{(0)}$. In particular, said calculation phase provides an error to associate with each of the pixels of this image that are to be improved.

Going into greater detail, the error calculation phase in accordance with the invention makes it possible to associate a respective error of a first type with a part of the pixels that are to be improved, said error being calculated in accordance with conventional techniques of the "back projection" type. For the sake of simplicity we shall henceforth refer to errors of this type by means of the term "standard error".

A standard error $e_{s\,tan\,d}$ can be calculated, for example, on the bases of the differences between corresponding pixels (for example, the differences between their luminance values) forming part, respectively, of acquired low-resolution images and the corresponding projected images.

In particular, the error can be calculated for a given pixel of the provisional high-resolution image on the basis of the differences between the pixels of the low-resolution images (acquired and projected) that influence the given pixel.

Referring to Figures 3 and 4, since the pixel hr(3,2) of the provisional high-resolution image, for example, is influenced by the pixels p3 and s1 of the low-resolution images, the respective standard error to be associated with it can be calculated on the basis of the differences:

$$d_p = p3 - \hat{p}3^{(0)}$$

and

$$d_s = s1 - \hat{s}1^{(0)}.$$

For example, the standard error could be obtained from an operation that combines these differences. The combination will preferably be a mean of the absolute values of the differences or a mean of the squares of these differences.

The standard error $e_{s\,\tan\,d}$ (3,2) to be associated with, for example, the pixel hr(3,2) of the provisional image $HR^{(0)}$ could be calculated as follows:

$$e_{s\,\tan\,d}\,(3,2) = \frac{|d_p| + |d_p|}{2}.$$

According to the present invention, the error to be associated with a pixel of the provisional image could be a respective error of the standard type or, alternately, an error of a second type, to which we shall henceforth refer as the local error $e_{loc}$.

Advantageously, the local error $e_{loc}$ can be calculated for a given pixel of the provisional high-resolution image by using the errors already calculated and associated with other pixels of the provisional image situated in the immediate vicinity of the pixel in question. For example, the local error $e_{loc}$ for a given pixel can be calculated by using the errors already associated with pixels situated in a neighbourhood around this pixel.

In greater detail, the local error $e_{loc}$ for a given pixel can be calculated, for example, as the mean of the errors associated with pixels situated in the vicinity of said pixel.

According to possible variants of the invention, the local error $e_{loc}$ for a given pixel can be calculated as the largest or the smallest of the errors associated with pixels situated in the vicinity of said pixel.

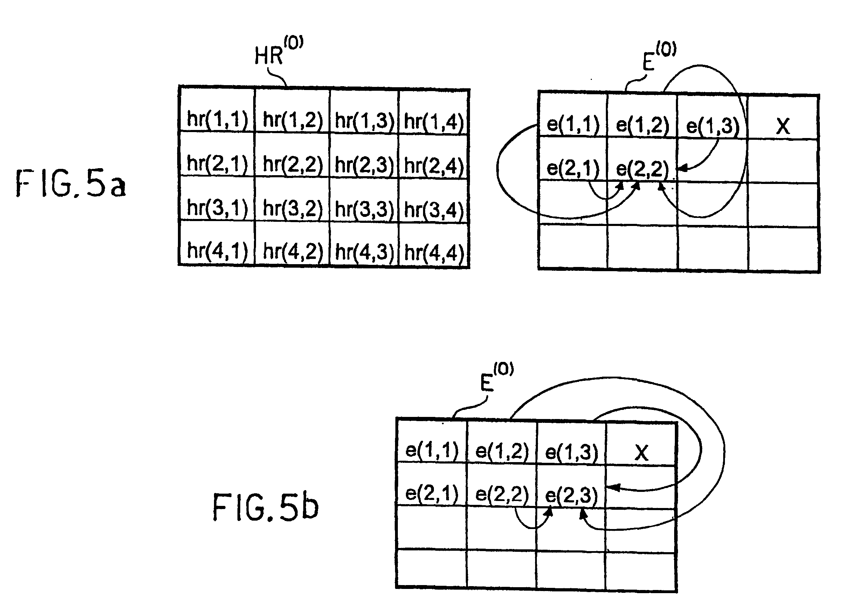

For example, Figure 5a shows, respectively, the pixel matrix of the provisional high-resolution image $HR^{(0)}$ and an error matrix $E^{(0)}$ containing errors associate with the pixels of the provisional high-resolution image $HR^{(0)}$ in the calculation phase. In the error matrix $E^{(0)}$ the errors are arranged in positions corresponding to the pixels of the provisional image with which they are associated.

In a preferred embodiment of the invention the error calculation phase associates the respective errors with the pixels of the provisional image by means of a systematic scanning of the provisional matrix from left to right and from top to bottom. In the example shown in Figure 5a, we may assume that the calculation phase associates with the pixel hr (1, 1) a respective error e(1,1), for example, of the standard type, i.e. $e(1,1) = e_{s\,\tan\,d}$ (1,1). Similarly, respective errors $e(1,2) = e_{s\,\tan\,d}(1,2)$ and $e(1,3) = e_{s\,\tan\,d}$ (1,3) of the standard type will be associated with the pixels hr(1, 2) and hr(1, 3). Figure 5a does not associate an error with pixel hr(1, 4), because - for example - this pixel does not form part of the set of pixels that are to be improved. The corresponding box of the error matrix $E^{(0)}$ is marked with an X to indicate that it does not contain an error value. Thereafter the calculation phase scans the second row of the provisional matrix $HR^{(0)}$, assigning a respective error of the standard type $e(2,1) = e_{s\,\tan\,d}(2,1)$ to the pixel hr(2,1). With the next pixel hr(2,2), on the other hand, there is associated an error $e(2,2) = e_{loc}(2,2)$ of the local type, i.e. calculated on the basis of previously calculated adjacent errors. For example, this error may be calculated as the mean of the previously calculated adjacent errors, i.e.:

$$e(2,2) = e_{loc}\,(2,2) = \frac{e(1,1) + e(1,2) + e(1,3) + e(2,1)}{4} =$$

$$= \frac{e_{s\,\tan\,d}(1,1) + e_{s\,\tan\,d}\,(1,2) + e_{s\,\tan\,d}\,(1,3) + e_{s\,\tan\,d}\,(2,1)}{4}.$$

In particular, in this example the error of the local type e(2,2) is calculated by using the previously calculated adjacent errors situated within a neighbourhood having a radius of one pixel around the pixel in question.

Referring now to Figure 5b, calculation of the error e(2,2) is followed by calculating an error $e(2, 3) = e_{loc}(2,3)$ (of the local type) associated with the pixel hr(2,3) and obtained as the following mean:

$$e(2,3) = e_{loc}\,(2,3) = \frac{e(1,2) + e(1,3) + e(2,2)}{3} =$$

$$= \frac{e_{s\,\tan\,d}\,(1,2) + e_{s\,\tan\,d}(1,3) + e_{loc}(2,2)}{3}.$$

It should be noted that in this case the error associated with the pixel hr(1,4) does not appear in the mean, because - as already mentioned - this pixel is not to be improved and therefore does not have an error associated with it. It should also be noted that a local error may be obtained by using previously calculated errors of both the local type and the standard type.

The type of error to be associated with a given pixel may be chosen on the basis of various criteria that in the light of the present description are readily apparent to a person skilled in the art. For example, one could choose to associate an error of the standard type with pixels situated substantially near the edges of the provisional high-resolution image (for example, with the pixels of the first row, the last row, the first column and the last column) and an error of the local type with all the remaining pixels.

Once the error calculation phase has been terminated, the provisional image $HR^{(0)}$ is at least partially processed by modifying the pixels on the basis of the respective error associated with them. In a preferred embodiment, for example, each pixel is modified by adding to it the respective error associated with it.

In this way one obtains a provisional high-resolution image $HR^{(1)}$ that can be repeatedly projected (generating a respective plurality of improved low-resolution images) and improved.

Iterating this improvement/projection process in which the plurality of starting images is not modified, while the further plurality and the provisional image are at least partly modified at each step, one obtains a final high-resolution image. As a general rule, the method terminates after a few iterations.

As already mentioned, the processing method terminates when no further improvement can be obtained or a possible further improvement would not produce any appreciable results. More particularly, with a view to increasing the speed and stability of the method, a pixel of the provisional high-resolution image will undergo no further modification, i.e. will be left unchanged in the iteration process, when the error associated with it becomes smaller than a predetermined threshold.

In another possible embodiment a high-resolution pixel will undergo correction/modification in a given iteration step only if the error associated with that pixel and calculated in that particular iteration step is smaller than the error calculated in the previous step, failing which the pixel will be left unchanged in all subsequent iteration steps. To this end it would be sufficient to keep track of the errors calculated in the previous step by means of, for example, an appropriate matrix. This matrix could be initialised before commencing the error calculation phase of the first iteration by forcing all its elements to a value equal to the maximum error that could theoretically be incurred. For example, if the method operates on the luminance component Y of the pixels and if each pixel of the provisional image memorizes the luminance information with 8 bits, the error that could be incurred in the worst case would be equal to the maximum value that could be represented with 8 bits, i.e. 255. In that case the matrix keeping track of the errors will be initialized by forcing all its elements to 255.

Advantageously, another variant of the method in accordance with the invention could operate in such a way that:

- the pixels for which a standard error is to be calculated and the pixels for which a local error is to be calculated are initially predetermined, for example: an error of the standard type is calculated for the pixels situated near the edges of the provisional image;
- as regards the pixels for which a local error is to be calculated, the procedure at each iteration step, pixel by pixel, is as follows: for each pixel it is first ascertained whether the respective calculated local error is smaller than the error associated with the given pixel in the previous iteration. If this condition is satisfied, the calculated local error is associated with the pixel. But if the condition is not satisfied, an error of the standard type is calculated for the pixel in question, subsequently ascertaining whether this error is smaller than the error associated with pixel in the previous iteration. If this condition is complied with, the standard error is associated with the pixel, otherwise it is decided that the pixel is not to undergo any further modification.

Experimental results have shown that with the present invention, thanks to the calculation of an error of the local type, the number of necessary iterations is considerably reduced as compared with a "back projection" approach of the traditional type and that the results obtained are also satisfactory in terms of quality. Advantageously, in particular, the method in accordance with the invention will typically require no more than two iterations, while an approach of the traditional type may at times require more than five.

An explanation of this result can be obtained when one bears in mind the fact that, due to the very nature of the acquisition process, the error incurred in the provisional image as compared with the final high-resolution image is an error that varies only slowly in the pixel domain, i.e. remains substantially uniform in the vicinity of a pixel. In this way, exploiting the available information regarding the errors incurred in the vicinity of a pixel, one statistically assures a more reliable error calculation and succeeds in impressing a uniform direction upon the processing/improvement procedure, thus avoiding the process being unduly prolonged by local divergences.

Thanks to the valuation of the uncertainty, moreover, the solution in accordance with the invention obtains a considerable reduction of the number of pixels that have to be corrected/modified already at the first iteration. This leads to a significant reduction of the computation cost. The method in accordance with the present invention can thus be advantageously used in applications that call for real-time processing capacities.

It should be noted that the teachings of the present invention regarding the calculation of the error of the local type can be applied to "back projection" methods of the conventional type that, like the Irani-Peleg method cited hereinabove, do not employ the criterion of further optimisation based on an uncertainty valuation.

Experimental trials have shown that, when the pixels of the provisional image that are to be modified/improved are selected on the basis of an uncertainty estimate, the number of pixels that have to be modified/improved in the first iteration will typically be equal to 50% of the total number of pixels. This number decreases exponentially in subsequent iterations.

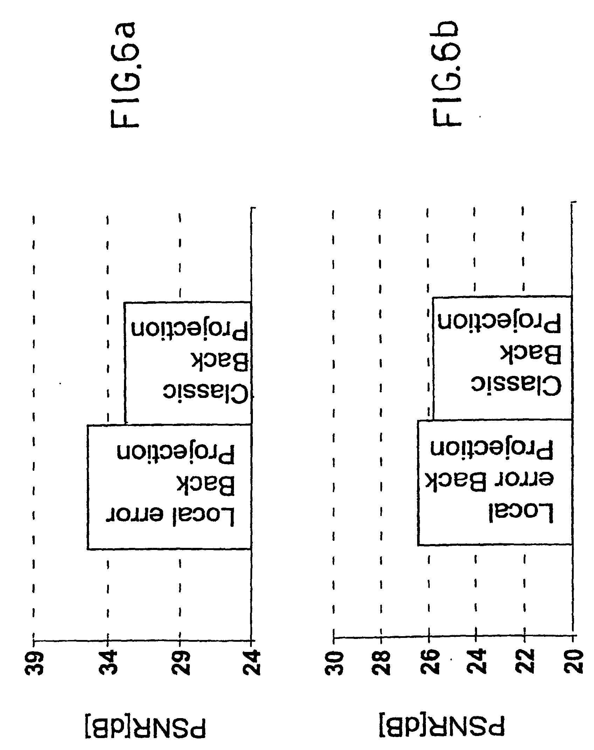

The graphs of Figures 6a and 6b refer to the results obtained for, respectively, a first and a second image that are different from each other and both have a high spectral content and propose a comparison in terms of quality between the method in accordance with the present invention, which in the figure is referred to as "local error back projection", and a classic back projection method such as the Irani-Peleg method, indicated in the figure as "classic back projection". The results of Figures 6a and 6b are expressed in terms of PSNR (Peak-to-Peak Signal to Noise Ratio). The PSNR is a standard-type measure and indicates the signal quantity as compared with the introduced noise quantity. It is important to note that, as can readily be seen from the graphs, the method in accordance with the present invention not only calls for a smaller number of iterations and a smaller number of processings in each iteration, but also provides a performance in terms of quality that is superior to what can be obtained by means of conventional techniques.

In particular, for the image of Figure 6a the PSNR value obtained by means of the method in accordance with the invention was greater than 35 dB, whereas the conventional method yielded a PSNR of the order of 33 dB. In Figure 6b, again, the method in accordance with the invention obtained a PSNR value equal to 26.36 dB, while the corresponding PSNR obtained with the conventional method amounted to about 25.87 dB.

The results in terms of quality obtained by means of the invention may be explained by the fact that this method, selecting the pixels to be modified on the basis of their uncertainty content, does not tend to render homogeneous or, to use another term, does not "smoothe" zones of the image that are almost "certain" and therefore do not have to be processed, this avoiding the introduction of (additional) noise.

Another reason why the proposed method assures excellent performance as compared with the classic back projection methods is due to the fact that the latter provide good results if they have at their disposal an accurate model of the acquisition process/device. When they use less accurate models such as the simple average formation mentioned in the present description, the classic methods no longer succeed in assuring better performances than the method in accordance with the invention. This aspect is of great importance when one bears in mind that the method in accordance with the present invention is particularly suitable for being implemented in commercial devices, which are usually expected to possess a certain versatility and to be simple in use, characteristics that could not be obtained if the performance were to be critically dependent on the chosen model.

Obviously, a person skilled in the art, especially when having to satisfy contingent and specific needs, could introduce numerous modifications and variants into the processing method for obtaining a high-resolution digital image as described hereinabove, though these would still remain within the protection limits of the invention as defined by the claims set out hereinbelow.

**Claims**

1. A method for obtaining a high-resolution digital image from a plurality of starting images ($P,S$) formed by pixel matrices acquired at a lower resolution, said method comprising the phases of:

   - combining the plurality of starting images ($P,S$) to generate a provisional high-resolution image ($HR^{(0)}$) formed by a pixel matrix,
   - carrying out a calculation operation to associate a respective error with at least a part of the pixels of the provisional image ($HR^{(0)}$), said calculation operation providing a first error associated with at least one first pixel,
   - at least partially processing the provisional image $(HR^{(0)})$ by modifying pixels of this image on the basis of their respective associated errors;

   **characterized in that** said calculation operation includes the phase of:

   - calculating a second error to associate with at least one second pixel situated in the vicinity of said first pixel in the matrix ($HR^{(0)}$), said second error being calculated by using the first error associated with said at least one first pixel.

2. A method in accordance with Claim 1, wherein the at least one first pixel is adjacent to the at least one second pixel in said pixel matrix ($HR^{(0)}$).

3. A method in accordance with Claim 1, wherein the at least one first pixel includes a plurality of pixels.

4. A method in accordance with Claim 3, wherein the second error to associate with the at least one second pixel is calculated as an arithmetic mean of the errors of said plurality of pixels.

5. A method in accordance with Claim 3, wherein the second error to associate with the at least one second pixel is equal to the greatest of the errors of said plurality of pixels.

6. A method in accordance with Claim 3, wherein the second error to associate with the at least one second pixel is equal to the smallest of the errors of said plurality of pixels.

7. A method in accordance with Claim 1, comprising also, after said phase of combining the starting images, a phase of:

   - producing from the provisional image ($HR^{(0)}$) a further plurality of low-resolution images ($\hat{P}^{(0)}, \hat{S}^{(0)},$) each of said images corresponding to a respective image of the plurality of starting images,

   and wherein said phase of at least partially processing the provisional image is such as to reduce a difference between corresponding images of the plurality of starting images ($P,S$) and said further plurality ($\hat{P}^{(0)}, \hat{S}^{(0)}$).

8. A method in accordance with Claim 7, wherein the first error is calculated on the basis of differences between corresponding pixels forming part of, respectively, images of the starting plurality ($P,S$) and corresponding images of the further plurality ($\hat{P}^{(0)}, \hat{S}^{(0)}$).

9. A method in accordance with Claim 1, wherein the first error is calculated by using a third error associated with a third pixel situated in the vicinity of said first pixel.

10. A method in accordance with Claim 1, comprising also, after said phase of combining the starting images, a phase of associating with pixels of the provisional image a respective measure representing the uncertainty of the pixels, and wherein said processing phase comprises a phase of leaving unmodified at least a subset of pixels of the provisional image with which there is associated a respective uncertainty measure smaller than a predetermined threshold value.

11. A method in accordance with Claim 10, wherein in said phase of combining to generate the provisional image each pixel of the provisional image is obtained by combining values of homologous pixels of said starting images and wherein said uncertainty measure associated with the respective pixel is obtained on the basis of digital values of the homologous pixels of the starting images.

12. A method in accordance with Claim 11, wherein said phase of combining to generate the provisional image is an operation of averaging digital values among homologous pixels of the starting images.

13. A method in accordance with Claim 10, wherein said phase of associating an uncertainty measure with a pixel comprises a phase of statistically characterizing the distribution of the homologous pixels of the starting images that generated said pixel in the combination phase.

14. A method in accordance with Claim 10, wherein said uncertainty measure of a pixel of the provisional image is correlated with the difference between the maximum value and the minimum value of the digital values of the homologous pixels of the starting images that generated said pixel in the combination phase.

15. A method in accordance with Claim 1, wherein said staring images are representative of one and the same real scene and portray different and at least partially superposed portions that are misaligned with respect to each other and wherein said method also comprises a phase of estimating the mutual misalignment of the starting images, said estimating phase preceding the combination phase.

16. A method in accordance with Claim 15, wherein said estimating phase is realized with a technique of the global motion type.

17. A method in accordance with Claim 15, wherein said estimating phase is realized with a technique of the local motion type.

**18.** A method in accordance with Claim 1, comprising also a phase of expanding the starting images to a resolution substantially equal to the resolution of the provisional image and wherein said expansion phase precedes the combination phase.

**19.** A method in accordance with Claim 18, wherein said expansion phase replicates pixels of the starting images.

**20.** A method in accordance with Claim 1, wherein said processing phase also comprises a phase of leaving unmodified pixels of the provisional image obtained by combining homologous pixels of the starting images and having a range of digital values not readily perceived by the human visual system.

**21.** A method in accordance with Claim 7, wherein said production phase is realized by simulating the acquisition process of the plurality of low-resolution starting images.

**22.** A method in accordance with Claim 21, wherein said production phase comprises an operation of averaging pixel blocks of the provisional image to obtain individual pixels in the images of the further plurality.

**23.** A method in accordance with Claim 1, wherein the starting images are in un YCrCb format that includes a luminance component and two chrominance components and wherein each pixel is associated with three 8-bit digital values.

**24.** A method in accordance with Claim 23, wherein said production and processing phases are carried out only for the luminance component Y of the starting images.

**25.** A method in accordance with Claim 1, wherein the processing phase comprises iteratively the phases of:

- modifying pixels of the provisional image to render said error smaller than a threshold error, the modification phase generating an improved provisional image, said high-resolution image being obtainable from said improved provisional image,
- generating from said improved provisional image a plurality of improved low-resolution images, each corresponding to a respective image of the plurality of starting images,
- evaluating for at least a part of the pixels of the improved provisional image a respective error correlated with the difference between corresponding images of the plurality of starting images and said plurality of improved low-resolution images.

**26.** An acquisition device (1) for acquiring a high-resolution digital image by processing a plurality of staring images in accordance with the method of anyone of the preceding claims.

**Patentansprüche**

**1.** Ein Verfahren zum Erhalten eines digitalen Hochauflösungsbildes von einer Mehrzahl von Ausgangsbildern (P, S), die durch Pixelmatrizen gebildet werden, die bei einer geringeren Auflösung erfasst werden, wobei das Verfahren folgende Phasen aufweist:

- Kombinieren der Mehrzahl von Ausgangsbildern (P, S), um ein provisorisches Hochauflösungsbild (HR$^{(0)}$, das durch eine Pixelmatrix gebildet wird, zu erzeugen,

- Ausführen eines Rechenvorgangs, um einen jeweiligen Fehler zumindest einem Teil der Pixel des provisorischen Bildes (HR$^{(0)}$) zuzuordnen, wobei der Rechenvorgang einen ersten Fehler liefert, der zumindest einem ersten Pixel zugeordnet ist,

- zumindest teilweises Verarbeiten des provisorischen Bildes (HR$^{(0)}$) durch Modifizieren von Pixeln dieses Bildes auf der Basis ihrer jeweiligen zugeordneten Fehler;

**dadurch gekennzeichnet, dass** der Rechenvorgang folgende Phase umfasst:

- Berechnen eines zweiten Fehlers, um ihn zumindest einem zweiten Pixel zuzuordnen, das in der Nähe des ersten Pixels in der Matrix (HR$^{(0)}$) angeordnet ist, wobei der zweite Fehler berechnet wird, indem der erste Fehler, der dem zumindest einen ersten Pixel zugeordnet ist, verwendet wird.

**2.** Das Verfahren gemäß Anspruch 1, bei dem das zumindest eine erste Pixel zu dem zumindest einen zweiten Pixel in der Pixelmatrix (HR$^{(0)}$) benachbart ist.

**3.** Das Verfahren gemäß Anspruch 1, bei dem das zumindest eine erste Pixel eine Mehrzahl von Pixeln umfasst.

**4.** Das Verfahren gemäß Anspruch 3, bei dem der zweite Fehler, der dem zumindest einen zweiten Pixel zugeordnet werden soll, als arithmetischer Mittelwert der Fehler der Mehrzahl von Pixeln berechnet wird.

**5.** Das Verfahren gemäß Anspruch 3, bei dem der zweite Fehler, der dem zumindest einen zweiten Pixel zugeordnet werden soll, gleich dem Größten der Fehler der Mehrzahl von Pixeln ist.

**6.** Das Verfahren gemäß Anspruch 3, bei dem der zweite Fehler, der dem zumindest einen zweiten Pixel zugeordnet werden soll, gleich dem Kleinsten der Fehler der Mehrzahl von Pixeln ist.

**7.** Das Verfahren gemäß Anspruch 1, das nach der Phase des Kombinierens der Ausgangsbilder ferner folgende Phase umfasst:

- Erzeugen einer weiteren Mehrzahl von Bildern mit niedriger Auflösung

$$\left( \hat{P}^{(0)},\ \hat{S}^{(0)} \right)$$

aus dem provisorischen Bild (HR$^{(0)}$), wobei jedes der Bilder einem jeweiligen Bild der Mehrzahl von Ausgangsbildern entspricht,

und bei dem die Phase des zumindest teilweisen Verarbeitens des provisorischen Bildes derart ist, um einen Unterschied zwischen entsprechenden Bildern der Mehrzahl von Ausgangsbildern (P, S) und der weiteren Mehrzahl

$$\left( \hat{P}^{(0)},\ \hat{S}^{(0)} \right)$$

zu verringern.

**8.** Das Verfahren gemäß Anspruch 7, bei dem der erste Fehler auf der Basis von Unterschieden zwischen entsprechenden Pixeln, die jeweils einen Teil von Bildern der Ausgangsmehrzahl (P, S) bilden, und entsprechenden Bildern der weiteren Mehrzahl

$$\left( \hat{P}^{(0)},\ \hat{S}^{(0)} \right)$$

berechnet wird.

**9.** Das Verfahren gemäß Anspruch 1, bei dem der erste Fehler berechnet wird, indem ein dritter Fehler verwendet wird, der einem in der Nähe des ersten Pixels angeordneten dritten Pixel zugeordnet ist.

**10.** Das Verfahren gemäß Anspruch 1, das nach der Phase des Kombinierens der Ausgangsbilder ferner eine Phase des Zuordnens, zu Pixeln des provisorischen Bildes, einer jeweiligen Maßzahl umfasst, die die Ungewissheit der Pixel darstellt, und bei dem die Verarbeitungsphase eine Phase umfasst, bei der zumindest ein Teilsatz von Pixeln des provisorischen Bildes, dem eine jeweilige Ungewissheitsmaßzahl, die kleiner ist als ein vorbestimmter Schwellwert, zugeordnet ist, unmodifiziert belassen wird.

**11.** Das Verfahren gemäß Anspruch 10, bei dem jedes Pixel des provisorischen Bildes in der Phase des Kombinierens, um das provisorische Bild zu erzeugen, erhalten wird, indem Werte homologer Pixel der Ausgangsbilder kombiniert

EP 1 372 335 B1

werden, und bei dem die Ungewissheitsmaßzahl, die dem jeweiligen Pixel zugeordnet ist, auf der Basis von digitalen Werten der homologen Pixel der Ausgangsbilder erhalten wird.

**12.** Das Verfahren gemäß Anspruch 11, bei dem die Phase des Kombinierens, um das provisorische Bild zu erzeugen, ein Vorgang des Mittelns digitaler Werte aus homologen Pixeln der Ausgangsbilder ist.

**13.** Das Verfahren gemäß Anspruch 10, bei dem die Phase des Zuordnens einer Ungewissheitsmaßzahl zu einem Pixel eine Phase eines statistischen Charakterisierens der Verteilung der homologen Pixel der Ausgangsbilder, die das Pixel in der Kombinationsphase erzeugten, umfasst.

**14.** Das Verfahren gemäß Anspruch 10, bei dem die Ungewissheitsmaßzahl eines Pixels des provisorischen Bildes mit dem Unterschied zwischen dem maximalen Wert und dem minimalen Wert der digitalen Werte der homologen Pixel der Ausgangsbilder, die das Pixel in der Kombinationsphase erzeugten, korreliert ist.

**15.** Das Verfahren gemäß Anspruch 1, bei dem die Ausgangsbilder für ein und dieselbe reale Szene repräsentativ sind und verschiedene und zumindest teilweise übereinanderliegende Abschnitte porträtieren, die in Bezug aufeinander fehlausgerichtet sind, und wobei das Verfahren ferner eine Phase des Schätzens der gegenseitigen Fehlausrichtung der Ausgangsbilder umfasst, wobei die Schätzphase der Kombinationsphase vorausgeht.

**16.** Das Verfahren gemäß Anspruch 15, bei dem die Schätzphase mit einer Technik vom Typ der globalen Bewegung verwirklicht wird.

**17.** Das Verfahren gemäß Anspruch 15, bei dem die Schätzphase mit einer Technik vom Typ der lokalen Bewegung verwirklicht wird.

**18.** Das Verfahren gemäß Anspruch 1, das ferner eine Phase des Erweiterns der Ausgangsbilder auf eine Auflösung umfasst, die im wesentlichen gleich der Auflösung des provisorischen Bildes ist, und bei dem die Erweiterungsphase der Kombinationsphase vorausgeht.

**19.** Das Verfahren gemäß Anspruch 18, bei dem die Erweiterungsphase Pixel der Ausgangsbilder repliziert.

**20.** Das Verfahren gemäß Anspruch 1, bei dem die Verarbeitungsphase ferner eine Phase des Unmodifiziert-Belassens von Pixeln des provisorischen Bildes umfasst, das durch Kombinieren homologer Pixel der Ausgangsbilder erhalten wird und das einen Bereich digitaler Werte aufweist, die durch das menschliche visuelle System nicht ohne weiteres wahrgenommen werden.

**21.** Das Verfahren gemäß Anspruch 7, bei dem die Produktionsphase verwirklicht wird, indem der Erfassungsvorgang der Mehrzahl von Ausgangsbildern mit geringer Auflösung simuliert wird.

**22.** Das Verfahren gemäß Anspruch 21, bei dem die Produktionsphase einen Vorgang eines Mittelns von Pixelblöcken des provisorischen Bildes, um einzelne Bilder in den Bildern der weiteren Mehrzahl zu erhalten, umfasst.

**23.** Das Verfahren gemäß Anspruch 1, bei dem die Ausgangsbilder in einem YCrCb-Format vorliegen, das eine Luminanzkomponente und zwei Chrominanzkomponenten umfasst, und bei dem jedes Pixel drei digitalen 8-Bit-Werten zugeordnet ist.

**24.** Das Verfahren gemäß Anspruch 23, bei dem die Produktions- und die Verarbeitungsphase lediglich für die Luminanzkomponente Y der Ausgangsbilder durchgeführt werden.

**25.** Das Verfahren gemäß Anspruch 1, bei dem die Verarbeitungsphase iterativ folgende Phasen umfasst:

-   Modifizieren von Pixeln des provisorischen Bildes, um den Fehler kleiner als einen Schwellenfehler zu machen, wobei die Modifikationsphase ein verbessertes provisorisches Bild erzeugt, wobei das Bild mit hoher Auflösung von dem verbesserten provisorischen Bild erhältlich ist,

-   Erzeugen, aus dem verbesserten provisorischen Bild, einer Mehrzahl verbesserter Bilder mit niedriger Auflösung, wobei jedes einem jeweiligen Bild der Mehrzahl von Ausgangsbildern entspricht,

- Auswerten, für zumindest einen Teil der Pixel des verbesserten provisorischen Bildes, eines jeweiligen Fehlers, der mit dem Unterschied zwischen entsprechenden Bildern der Mehrzahl von Ausgangsbildern und der Mehrzahl von verbesserten Bildern mit geringer Auflösung korreliert ist.

26. Eine Erfassungsvorrichtung (1) zum Erfassen eines digitalen Bildes mit hoher Auflösung durch Verarbeiten einer Mehrzahl von Ausgangsbildern gemäß dem Verfahren eines der vorhergehenden Ansprüche.

**Revendications**

1. Procédé pour obtenir une image numérique à haute résolution à partir d'une pluralité d'images de départ (P, S) formées par des matrices de pixels acquises à une résolution plus basse, ledit procédé comprenant les phases consistant à :

   - combiner la pluralité d'images de départ (P, S) pour produire une image à haute résolution provisoire ($HR^{(0)}$) formée par une matrice de pixels,
   - exécuter une opération de calcul pour associer une erreur respective à au moins une partie des pixels de l'image provisoire ($HR^{(0)}$), ladite opération de calcul fournissant une première erreur associée à au moins un premier pixel,
   - traiter au moins partiellement l'image provisoire ($HR^{(0)}$) en modifiant des pixels de cette image sur la base de leurs erreurs associées respectives,

   **caractérisé en ce que** ladite opération de calcul comprend la phase consistant à :

   - calculer une deuxième erreur à associer à au moins un deuxième pixel situé à proximité dudit premier pixel de la matrice ($HR^{(0)}$), ladite deuxième erreur étant calculée en utilisant la première erreur associée audit au moins premier pixel.

2. Procédé selon la revendication 1, dans lequel l'au moins premier pixel est adjacent à l'au moins deuxième pixel de ladite matrice de pixels ($HR^{(0)}$).

3. Procédé selon la revendication 1, dans lequel l'au moins premier pixel comprend une pluralité de pixels.

4. Procédé selon la revendication 3, dans lequel la deuxième erreur à associer à l'au moins deuxième pixel est calculée comme étant une moyenne arithmétique des erreurs de ladite pluralité de pixels.

5. Procédé selon la revendication 3, dans lequel la deuxième erreur à associer à l'au moins deuxième pixel est supérieure ou égale à la plus grande des erreurs de ladite pluralité de pixels.

6. Procédé selon la revendication 3, dans lequel la deuxième erreur à associer à l'au moins deuxième pixel est inférieure ou égale à la plus petite des erreurs de ladite pluralité de pixels.

7. Procédé selon la revendication 1, comprenant également, après ladite phase consistant à combiner les images de départ, une phase consistant à :

   - produire à partir de l'image provisoire ($HR^{(0)}$) une autre pluralité d'images à basse résolution ($\hat{P}^{(0)}, \hat{S}^{(0)}$), chacune desdites images correspondant à une image respective de la pluralité d'images de départ,

   et dans lequel ladite phase consistant à traiter au moins partiellement l'image provisoire est de réduire une différence entre des images correspondantes de la pluralité d'images de départ (P, S) et de ladite autre pluralité ($P^{(0)}, S^{(0)}$).

8. Procédé selon la revendication 7, dans lequel la première erreur est calculée sur la base des différences entre les pixels correspondants formant une partie, respectivement, des images de la pluralité de départ (P, S) et des images correspondantes de l'autre pluralité ($P^{(0)}, S^{(0)}$).

9. Procédé selon la revendication 1, dans lequel la première erreur est calculée en utilisant une troisième erreur associée à un troisième pixel situé à proximité dudit premier pixel.

**10.** Procédé selon la revendication 1, comprenant également, après ladite phase consistant à combiner les images de départ, une phase consistant à associer aux pixels de l'image provisoire une mesure respective représentant l'incertitude des pixels, et dans lequel ladite phase de traitement comprend une phase consistant à laisser non modifié au moins un sous-ensemble de pixels de l'image provisoire à laquelle est associée une mesure d'incertitude respective plus petite qu'une valeur de seuil prédéterminée.

**11.** Procédé selon la revendication 10, dans lequel dans ladite phase de combinaison pour produire l'image provisoire, chaque pixel de l'image provisoire est obtenu en combinant des valeurs des pixels homologues desdites images de départ et dans lequel ladite mesure d'incertitude associée au pixel respectif est obtenue sur la base des valeurs numériques des pixels homologues des images de départ.

**12.** Procédé selon la revendication 11, dans lequel ladite phase de combinaison pour produire l'image provisoire est une opération consistant à faire la moyenne des valeurs numériques entre des pixels homologues des images de départ.

**13.** Procédé selon la revendication 10, dans lequel ladite phase consistant à associer une mesure d'incertitude à un pixel, comprend une phase consistant à
caractériser de manière statistique la distribution des pixels homologues des images de départ qui ont produit ledit pixel dans la phase de combinaison.

**14.** Procédé selon la revendication 10, dans lequel ladite mesure d'incertitude d'un pixel de l'image provisoire est corrélée avec la différence entre la valeur maximum et la valeur minimum des valeurs numériques des pixels homologues des images de départ qui ont produit ledit pixel dans la phase de combinaison.

**15.** Procédé selon la revendication 1, dans lequel lesdites images de départ sont représentatives d'une seule et même scène réelle et représentent des parties différentes au moins partiellement superposées qui sont désalignés les unes par rapport aux autres et dans lequel ledit procédé comprend également une phase consistant à estimer le désalignement mutuel des images de départ, ladite phase d'estimation précédant la phase de combinaison.

**16.** Procédé selon la revendication 15, dans lequel ladite phase d'estimation est réalisée grâce à une technique du type mouvement global.

**17.** Procédé selon la revendication 15, dans lequel ladite phase d'estimation est réalisée grâce à une technique du type mouvement local.

**18.** Procédé selon la revendication 1, comprenant également une phase consistant à agrandir les images de départ jusqu'à une résolution sensiblement égale à la résolution de l'image provisoire et dans lequel ladite phase d'expansion précède la phase de combinaison.

**19.** Procédé selon la revendication 18, dans lequel ladite phase d'expansion réplique des pixels des images de départ.

**20.** Procédé selon la revendication 1, dans lequel ladite phase de traitement comprend également une phase consistant à laisser des pixels non modifiés de l'image provisoire obtenue en combinant des pixels homologues des images de départ et ayant une plage de valeurs numériques non perçues aisément par le système visuel humain.

**21.** Procédé selon la revendication 7, dans lequel ladite phase de production est réalisée en simulant le processus d'acquisition de la pluralité d'images de départ à basse résolution.

**22.** Procédé selon la revendication 21, dans lequel ladite phase de production comprend une opération consistant à moyenner des blocs de pixels de l'image provisoire pour obtenir des pixels individuels des images de l'autre pluralité.

**23.** Procédé selon la revendication 1, dans lequel les images de départ sont dans un format YCrCb qui comprend une composante de luminance et deux composantes de chrominance et dans lequel chaque pixel est associé à trois valeurs numériques de 8 bits.

**24.** Procédé selon la revendication 23, dans lequel lesdites phases de production et de traitement sont exécutées seulement pour la composante de luminance Y des images de départ.

**25.** Procédé selon la revendication 1, dans lequel la phase de traitement comprend de manière itérative les phases consistant à :

- modifier des pixels de l'image provisoire pour rendre ladite erreur plus petite qu'une erreur de seuil, la phase de modification produisant une image provisoire améliorée, ladite image à haute résolution pouvant être obtenue à partir de ladite image provisoire améliorée,
- générer à partir de ladite image provisoire améliorée une pluralité d'images à basse résolution améliorées, chacune d'elles correspondant à une image respective de la pluralité d'images de départ,
- évaluer pour au moins une partie des pixels de l'image provisoire améliorée une erreur respective corrélée avec la différence entre les images correspondantes de la dite pluralité d'images de départ et de la dite pluralité d'images à basse résolution améliorées.

**26.** Dispositif d'acquisition (1) pour acquérir une image numérique à haute résolution en traitant une pluralité d'images de départ selon le procédé de l'une quelconque des revendications précédentes.

FIG.1

EP 1 372 335 B1

| G | R | G | R | G | R |
|---|---|---|---|---|---|
| B | G | B | G | B | G |
| G | R | G | R | G | R |
| B | G | B | G | B | G |
| G | R | G | R | G | R |
| B | G | B | G | B | G |

10

FIG. 2

P

| p1 | p2 |
|----|----|
| p3 | p4 |

S

| s1 | s2 |
|----|----|
| s3 | s4 |

Pexp

| p1 | p1 | p2 | p2 |
|----|----|----|----|
| p1 | p1 | p2 | p2 |
| p3 | p3 | p4 | p4 |
| p3 | p3 | p4 | p4 |

Sexp

| s1 | s1 | s2 | s2 |
|----|----|----|----|
| s1 | s1 | s2 | s2 |
| s3 | s3 | s4 | s4 |
| s3 | s3 | s4 | s4 |

Pexp

| p1 | p1 | p2 | p2 | |
|----|----|----|----|----|
| p1 | p1 s1 | p2 s1 | p2 s2 | s2 |
| p3 | p3 s1 | p4 s1 | p4 s2 | s2 |
| p3 | p3 s3 | p4 s3 | p4 s4 | s4 |
| | s3 | s3 | s4 | s4 |

Sexp

d

$HR^{(0)}$

| p1 | p1 | p2 | p2 |
|----|----|----|----|
| p1 | $\dfrac{(p1+s1)}{2}$ | $\dfrac{(p2+s1)}{2}$ | $\dfrac{(p2+s2)}{2}$ |
| p3 | $\dfrac{(p3+s1)}{2}$ | $\dfrac{(p4+s1)}{2}$ | $\dfrac{(p4+s2)}{2}$ |
| p3 | $\dfrac{(p3+s3)}{2}$ | $\dfrac{(p4+s3)}{2}$ | $\dfrac{(p4+s4)}{2}$ |

hr(3,2)

FIG. 3

FIG. 4

EP 1 372 335 B1

EP 1 372 335 B1

FIG.5a

$HR^{(0)}$

| hr(1,1) | hr(1,2) | hr(1,3) | hr(1,4) |
| hr(2,1) | hr(2,2) | hr(2,3) | hr(2,4) |
| hr(3,1) | hr(3,2) | hr(3,3) | hr(3,4) |
| hr(4,1) | hr(4,2) | hr(4,3) | hr(4,4) |

$E^{(0)}$

| e(1,1) | e(1,2) | e(1,3) | X |
| e(2,1) | e(2,2) | | |
| | | | |
| | | | |

FIG.5b

$E^{(0)}$

| e(1,1) | e(1,2) | e(1,3) | X |
| e(2,1) | e(2,2) | e(2,3) | |
| | | | |
| | | | |

FIG.6a

FIG.6b